# FASCICULE DE BREVET EUROPEEN

(11) **EP 1 134 503 B1**
(45) Date de publication et mention de la délivrance du brevet: **12.11.2003**
(21) Numéro de dépôt: 01400128.3
(22) Date de dépôt: 17.01.2001
(51) Int. Cl.: F24D 3/14

(54) **Dalle a plots**
Noppenplatte
Plate with protuberances

(30) Priorité: 20.01.2000 FR 0000682
(43) Date de publication de la demande: 19.09.2001
(73) Titulaire: Acome Société Cooperative De Travailleurs, 75008 Paris (FR)
(72) Inventeur: Pournain, Gérard, 14000 Caen (FR); Fourmond, Jean-Claude, 50140 Rancoudray (FR); Chanliau, Marc, 50600 Martigny (FR)
(74) Mandataire: Gorrée, Jean-Michel

(56) Documents cités:
- EP-A- 0 806 614
- DE-A- 3 020 405
- FR-A- 2 695 986

## Description

La présente invention concerne des perfectionnements apportés aux dalles à plots constituées en un matériau thermiquement isolant, les plots ayant un contour général sensiblement carré et étant disposés en rangées adjacentes mutuellement décalées et en colonnes adjacentes mutuellement décalées de sorte qu'ils sont alignés diagonalement sur des diagonales perpendiculaires, ces plots étant propres à retenir des tubes de circulation de fluide encliquetés entre des paires de plots diagonalement contigus.

Des dalles à plots sont montrées par exemple dans les documents FR 2 695 986 A, EP 0 806 614 A et DE 30 20 405 A.

Des dalles à plots de ce type sont couramment employées dans la construction de bâtiments. Ces dalles reposent sur un support sous-jacent, formé par exemple d'une dalle brute en béton, et sont elles-mêmes recouvertes d'une dalle en béton ou d'une chape en ciment pouvant être pourvue d'un revêtement de sol.

Ces dalles à plots, souvent constituées en polystyrène expansé ou analogue, assurent la quadruple fonction d'isolation thermique, d'isolation phonique, de support de tubes de circulation de fluide (chauffage/rafraîchissement) et d'aide à la pose de ces tubes.

Les fonctions d'isolation thermique et d'isolation phonique sont des fonctions permanentes, assurée une fois la construction achevée.

Les fonctions de support des tubes et d'aide à la pose des tubes sont des fonctions provisoires, utiles pour faciliter la construction. Bien que provisoires, ces deux fonctions sont cependant d'une grande importance car c'est d'elles que dépend la rapidité d'installation des tubes, et la répercussion sur le coût de la construction n'est pas négligeable.

C'est pour cette raison qu'il y a eu de nombreux types de dalles à plots qui ont été proposés jusqu'ici, avec des configurations très diverses des plots aussi bien dans leurs formes que dans leur répartition dans le but de faciliter l'implantation des tubes selon des parcours très variés prétendant procurer un chauffage aussi régulier et efficace que possible.

Toutefois, il s'avère qu'en pratique aucune des dalles à plots actuellement connues ne donne totalement satisfaction aux exigences des utilisateurs, soit parce qu'elles sont conçues pour des applications particulières qui en limitent l'emploi dans d'autres configurations, soit parce qu'elles présentent des insuffisances intrinsèques, notamment une insuffisance dans la résistance mécanique des plots qui sont sujets à l'écrasement.

L'invention a pour but de remédier aux insuffisances des dalles antérieures, et de proposer une dalle perfectionnée qui soit d'un emploi plus souple et donc plus universel, qui facilite notablement le processus de mise en place des tubes quelle que soit la configuration souhaitée pour ceux-ci, et qui possède des plots présentant une bonne résistance à l'écrasement.

Ces buts sont atteints grâce à une dalle à plots telle que définie au préambule qui, étant agencée conformément à l'invention, se caractérise en ce que, à chacun des ses angles, chaque plot possède, dans sa zone supérieure, un nez saillant d'étendue diagonale,
en ce que les portions de paroi, sous-jacentes au nez, des deux côtés du plot qui sont contigus au nez, sont concaves sensiblement parallèlement à la diagonale, et
en ce que deux nez en vis-à-vis appartenant respectivement à deux plots diagonalement contigus sont séparés d'un intervalle inférieur au diamètre d'un tube et définissant, pour un tube, un passage avec retenue.

Grâce à cet agencement, chaque passage avec retenue défini entre les angles en regard de deux plots diagonalement contigus procure une grande souplesse d'installation des tubes puisqu'il peut indifféremment être traversé soit par des tubes longeant les côtés du plot adjacents au nez, soit par un tube s'étendant diagonalement perpendiculairement à l'étendue du nez.

Chaque plot peut ainsi avoir des dimensions suffisantes pour pouvoir offrir une bonne résistance à l'écrasement.

En outre la disposition des plots en quinconce laisse subsister entre eux des zones vides ayant une étendue suffisante pour qu'un tube puisse y être coudé de 90°. De ce fait l'implantation des tubes peut se faire sans difficulté selon n'importe quel schéma, même complexe.

Grâce à la présence des nez, le tube, introduit à force dans le passage de retenue, y est bloqué quelles que soient les manipulations imprimées à la partie amont ou aval du tube.

De préférence, entre deux angles en vis-à-vis de deux plots respectifs diagonalement contigus est disposée une partie surélevée par rapport à la surface de la dalle, qui définit inférieurement le susdit passage avec retenue et qui est propre à supporter un tube en position surélevée par rapport à la surface de la dalle. Ainsi le tube est maintenu soulevé au-dessus de la surface de la dalle et, lors du coulage du béton ou du ciment de la dalle de couverture, ce béton ou ce ciment peut couler sous le tube : le tube se trouve alors étroitement enrobé dans le béton ou le ciment sur toute sa surface périphérique, ce qui conduit à un échange thermique de très bonne qualité.

Dans un mode de réalisation préféré, chaque plot est creusé de deux gouttières sensiblement perpendiculaires entre elles et aux parois latérales du plot, débouchant sensiblement au milieu desdites parois, et subdivisant le plot en quatre pavés, et ces gouttières s'étendent verticalement jusqu'à la surface de la dalle, ces gouttières étant conformées pour recevoir et retenir un tube de circulation de fluide. Grâce à cet agencement, on dispose d'un pas de pose des tubes qui est réduit de moitié, ce qui, malgré la limitation à un schéma de pose orthogonale, peut procurer une souplesse considérablement accrue pour l'implantation du réseau de tubes. Dans ce cas, du fait que ces gouttières concernent la mise en place de tubes ne passant pas par les passages de retenue définis par les nez précités, il est souhaitable que la paroi latérale définissant une gouttière précitée soit concave au moins sur une partie de son étendue et se termine inférieurement par une semelle inclinée saillante propre à maintenir le tube au-dessus de la surface de la dalle : de la sorte le tube est retenu dans la gouttière, en même temps qu'il est soutenu par la semelle en position surélevée au-dessus de la surface de la dalle afin de pouvoir être enrobé dans le béton ou le ciment.

Malgré la subdivision des plots en quatre pavés, les dispositions adoptées dans le cadre de l'invention permettent de conserver à chaque pavé des caractéristiques mécaniques (notamment résistance mécanique) suffisante pour éviter les défauts rencontrés dans les dalles antérieures.

Dans un mode de réalisation particulier, on prévoit que les diagonales sécantes sur lesquelles sont alignés les plots sont disposées, et notamment mutuellement écartées, de manière telle qu'il subsiste des zones dépourvues de plots ayant des dimensions suffisantes pour qu'il soit possible d'y poser au moins un pied.

Il en résulte que, lors de la pose des dalles et de l'installation des conduits ou analogues, les ouvriers peuvent marcher librement sur la dalle en posant les pieds dans les zones libres, sans écraser des plots dont l'endommagement peut rendre difficile l'installation des conduits.

Il en résulte en outre l'avantage très intéressant que, n'ayant plus à supporter le poids d'un homme, les plots n'ont plus à présenter une résistance mécanique aussi élevée et ils peuvent être constitués avec une masse volumique allégée (compatible toutefois avec la classe de compressibilité exigée dans le bâtiment). Il en résulte un gain financier sensible.

De plus, en raison de la disparition d'un nombre notable de plots, les cheminements possibles pour la pose des conduits voient leur nombre accru, avec une possibilité de moindre courbure des conduits dans les angles, alors que la qualité de la retenue des conduits ne s'en trouve pas affectée.

Au total, les conduits sont mis en place avec des contraintes moindres, et donc plus rapidement, ce qui se traduit par un coût d'installation réduit.

L'invention sera mieux comprise à la lecture de la description détaillée qui suit de certains modes de réalisation donnés uniquement à titre d'exemples non limitatifs. Dans cette description, on se réfère aux dessins annexés sur lesquels :
- la figure 1 est un schéma simplifié illustrant, en vue de dessus, un plot d'une dalle conforme à l'invention ;
- la figure 2 est un schéma simplifié illustrant, en vue de dessus et à plus petite échelle, une portion de dalle conforme à l'invention avec une multiplicité de plots selon la figure 1 ;
- la figure 3 est une vue selon la ligne III-III des figures 1 et 2, montrant partie en coupe, partie en vue de côté une portion de dalle et de plot ;
- la figure 4 est une vue partielle en coupe selon la ligne IV-IV des figures 1 et 2 ;
- la figure 5 est un schéma simplifié illustrant, en vue de dessus, un mode de réalisation préféré d'un plot de dalle conforme à l'invention ;
- la figure 6 est un schéma simplifié illustrant, en vue de dessus et à plus petite échelle, une portion de dalle conforme à l'invention avec une multiplicité de plots selon la figure 5 ;
- la figure 7 est une vue selon la ligne VII-VII des figures 5 et 6, montrant partie en coupe, partie en vue de côté une portion de dalle et de plot ; et
- la figure 8 est une vue partielle de dessus d'un mode particulier de réalisation d'une dalle conforme à l'invention mettant en oeuvre un moindre nombre de plots.

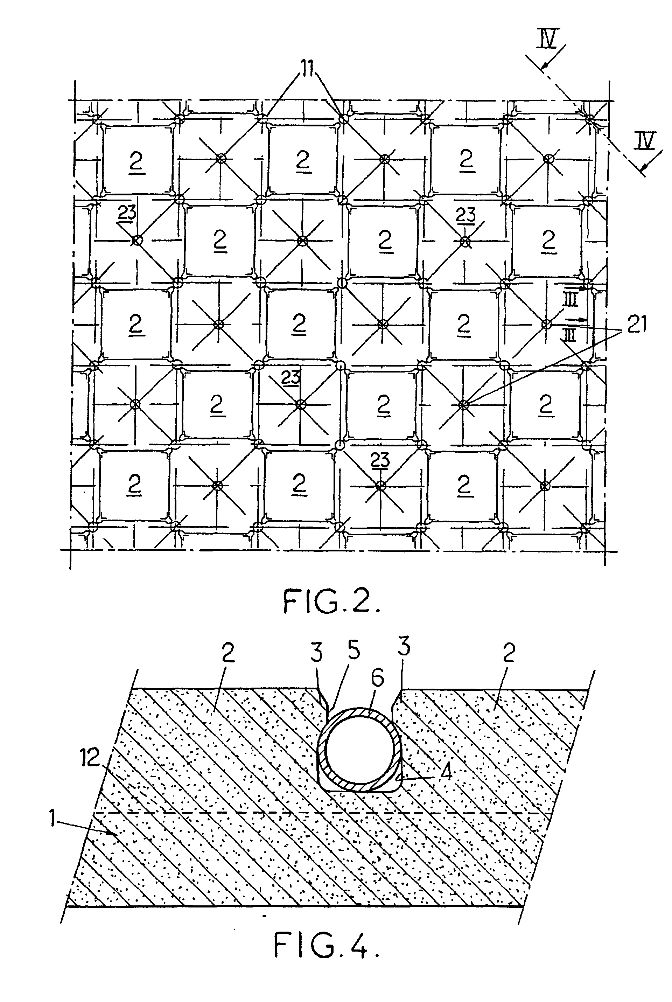

En se reportant tout d'abord à la figure 2, une dalle à plots, désignée dans son ensemble par la référence 1, est constituée en polystyrène expansé, moulé, avec formation sur sa face supérieure de plots 2 destinés à faciliter la mise en place et à retenir un ensemble de tubes de circulation de fluide de chauffage/rafraîchissement.

Les plots 2 sont de forme générale sensiblement carrée et sont disposés en rangées contiguës mutuellement décalées et en colonnes contiguës mutuellement décalées, de sorte que les plots sont alignés diagonalement, ou autrement dit sont disposés en quinconce.

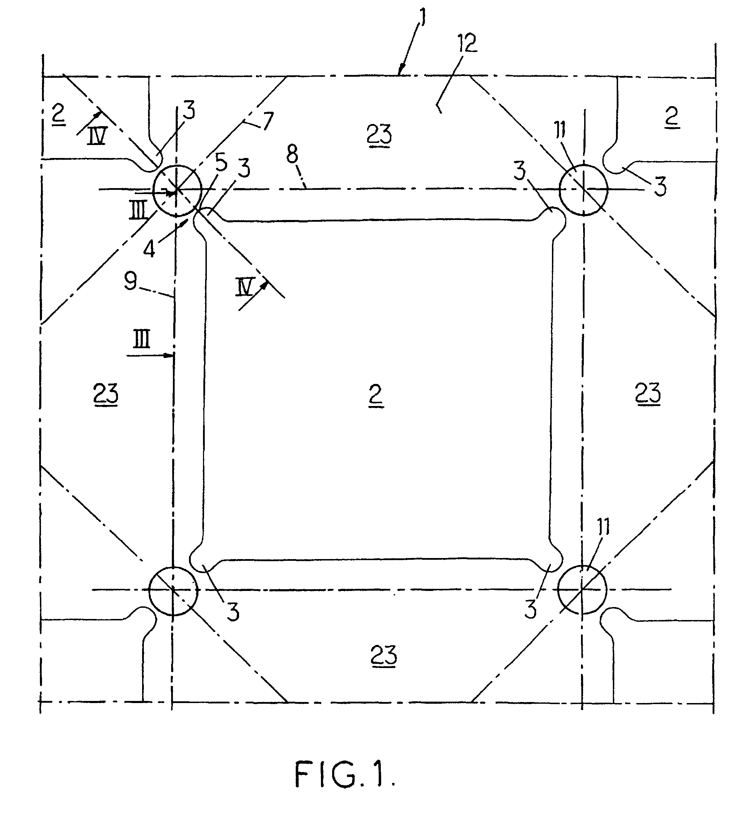

Comme on le voit mieux à la figure 1, chaque plot possède, à chacun de ses angles et à sa partie supérieure, un nez saillant 3 d'étendue diagonale.

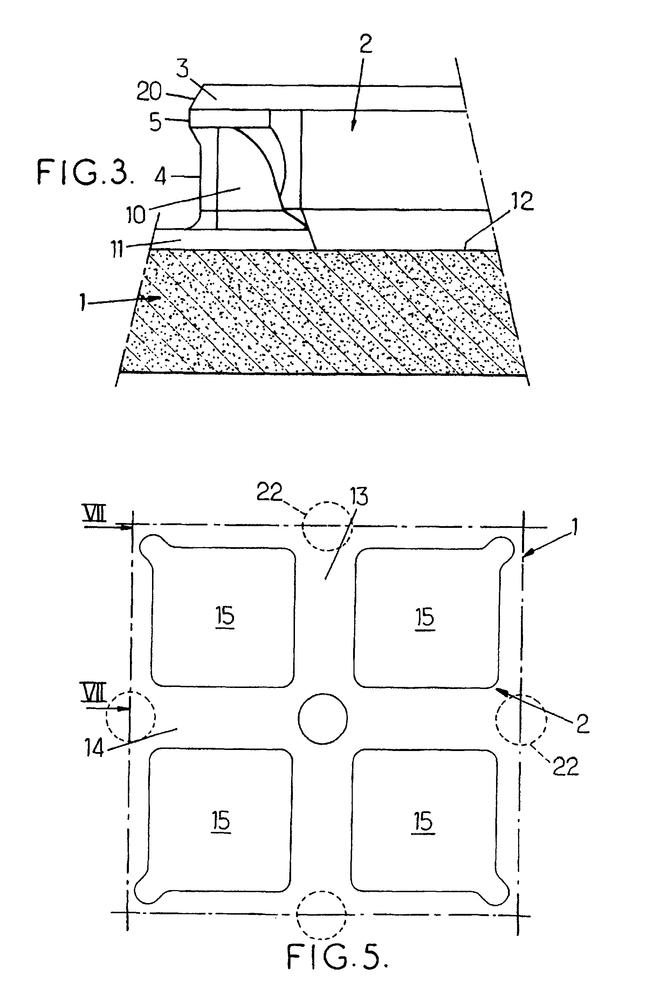

De ce fait, comme on le voit mieux aux figures 1 et 3, deux angles en vis-à-vis de deux plots 2 contigus définissent un passage 4 à ouverture ou intervalle supérieur 5 rétréci par les nez 3 en vis-à-vis. Chaque passage 4 peut ainsi être traversé par un tube 6 dont le diamètre est en correspondance avec la largeur du passage 4 et qui est retenu dans ce passage en raison du rétrécissement de l'ouverture 5 formée par les nez 3. Le tube 6 est mis en place dans le passage 4 par enfoncement à force à travers l'ouverture 5.

De plus, comme représenté à la figure 3, les portions de paroi, sous-jacentes au nez 3, des deux côtés du plot qui sont contigus au nez sont creusées en 10 et sont donc concaves selon une étendue sensiblement parallèle à la diagonale. Il en résulte que, comme visible à la figure 1, non seulement le passage avec retenue 4 peut être traversé par un tube s'étendant selon la diagonale 7 perpendiculaire à la diagonale selon laquelle s'étendent les deux nez 3 en vis-à-vis, mais en outre, grâce à la concavité des portions de paroi latérales adjacentes aux nez, il est possible que le passage 4 soit traversé par des tubes s'étendant parallèlement aux côtés des plots et le long de ceux-ci, soit selon la direction 8, soit selon la direction 9.

Des plots agencés conformément à l'invention permettent, malgré une géométrie relativement simple, de retenir des tubes s'étendant selon trois directions possibles.

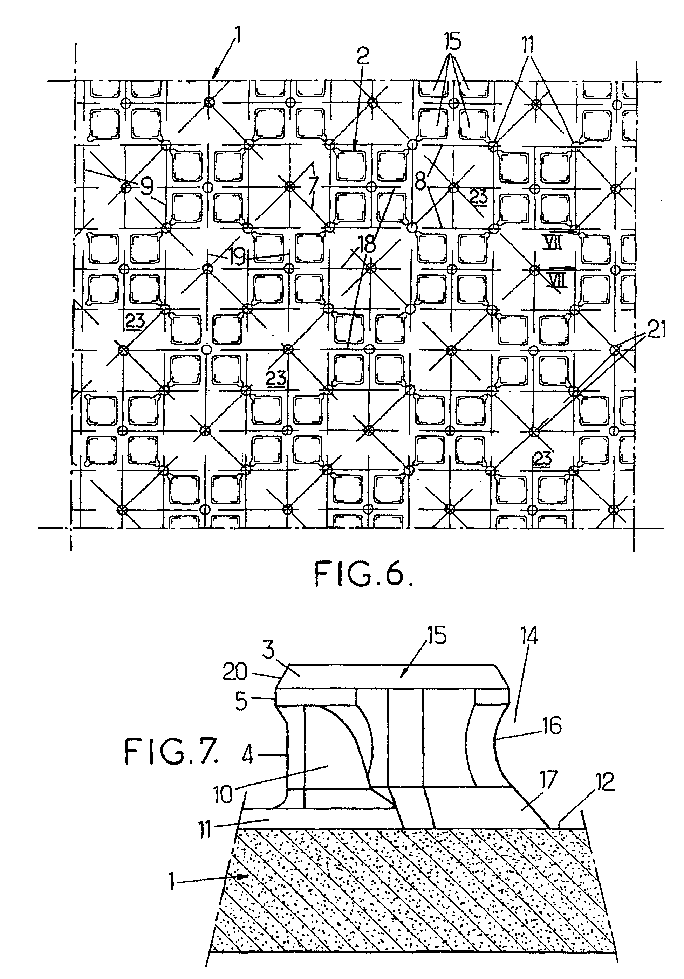

On notera au surplus qu'entre deux angles en vis-à-vis de respectivement deux plots diagonalement contigus, est disposée une partie 11 surélevée par rapport à la surface 12 de la dalle. Cette partie surélevée 11 peut s'étendre de façon continue entre les pieds des deux plots 2 qu'elle réunit (configuration en traverse illustrée aux figures 3 et 4), ou bien être réalisée sous forme d'une pastille isolée de forme quelconque (par exemple ronde), comme visible sur les figures 1 et 2. Dans tous les cas, cette partie surélevée maintient le tube 6 écarté de la surface 12 de la dalle : de la sorte, lors du coulage de la dalle de recouvrement, le béton ou le ciment liquide peut passer sous le tube qui y est ainsi noyé ; on obtient ainsi un contact thermique de bonne qualité entre le tube et la dalle de recouvrement et une meilleure diffusion de la chaleur ou du froid.

Pour éviter toute flexion indésirée des tubes posés en diagonale, on peut envisager la présence de parties surélevées 21 (par exemple en forme de pastilles) sensiblement au centre des zones libres 23 définies entre quatre plots 2 contigus par leurs angles.

Dans un mode de réalisation préféré illustré à la figure 5, chaque plot 2 est creusé de deux gouttières 13, 14 sensiblement perpendiculaires entre elles et perpendiculaires respectivement aux côtés du plot sur lesquels elles débouchent sensiblement en leurs milieux respectifs. Le plot 2 se trouve ainsi subdivisé en quatre pavés 15.

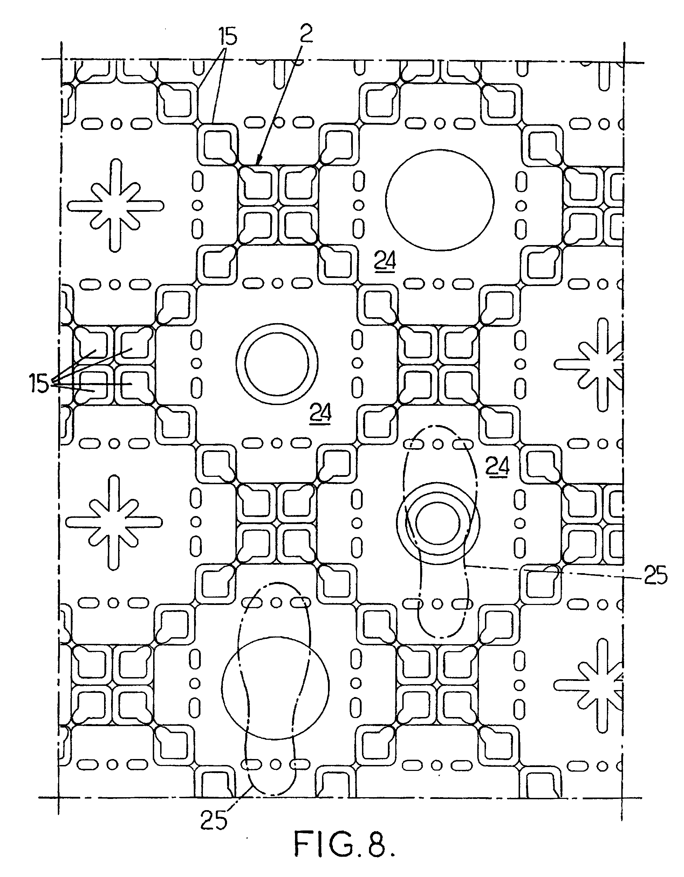

Les gouttières 13, 14 possèdent une largeur et une profondeur les rendant propres à recevoir et à retenir un tube. A cette fin, la paroi de chaque pavé 15 définissant une gouttière 13, 14 est, comme montré à la figure 7, creusée et concave 16 sur au moins une partie de son étendue et elle se termine inférieurement par une semelle inclinée saillante 17 occupant une partie du fond de la gouttière. Ainsi, un tube engagé dans une gouttière y est retenu et est maintenu écarté de la surface 12 de la dalle 1 toujours aux fins de permettre un enrobage optimum du tube dans le béton ou le ciment de la dalle de revêtement. On notera que le soutien des tubes lors de la mise en place peut être, là aussi, procuré par des parties surélevées 22, par exemple en forme de pastille (comme illustré à la figure 5), situées aux débouchés des gouttières 13, 14.

Grâce à cet agencement, comme visible à la figure 6, on superpose, aux directions principales 7, 8 et 9 de pose des tubes, apparaissant à la figure 2, des directions optionnelles 18 et 19 orthogonales, et décalées par rapport aux directions 8 et 9. On dispose ainsi, pour la pose des tubes, d'une possibilité de pose selon un pas de référence (directions 8 et 9) ou selon un pas optionnel identique, mais décalé (directions 18, 19), ou encore selon un pas moitié moindre en combinant les deux précédents. Le mode de réalisation de dalle à plots qui est configurée selon les figures 5 à 7 offre donc une grande souplesse pour l'implantation des tubes.

Enfin, comme illustré aux figures 3, 4 et 7, le bord supérieur de chaque plot 2 ou de chaque pavé 15 est chanfreiné 20 périmétriquement, y compris sur le nez 3. Typiquement un chanfrein d'environ 60°, ayant une largeur de l'ordre de 2,5 mm, permet une introduction facile des tubes.

En résumé, les plots sont agencés pour procurer un bon maintien des tubes, avec des surfaces de contact des tubes avec les parois des plots et la surface supérieure 12 de la dalle qui sont minimales et qui conduisent à des échanges thermiques maximum avec la chape.

Egalement la forme des plots et notamment des nez permet une implantation des tubes dans les passages avec retenue 4 soit en diagonale, soit parallèlement aux parois des plots. Les côtes peuvent être rigoureusement adaptées pour procurer un maintien et un guidage efficaces des tubes, mais aussi pour permettre une mise en oeuvre en fabrication industrielle soignée. En effet, les formes adoptées sont particulièrement bien adaptées pour autoriser le démoulage de la dalle en polystyrène dans de bonnes conditions ; lors du démoulage, l'élasticité relative des nez des plots et la rigidité de l'attache des nez sur la partie massive permettent une déformation des nez vers le haut, puis leur retour élastique en position normale.

Dans un exemple typique de réalisation d'une dalle à plots conforme aux schémas des figures 5 à 7, le pas initial de 100 mm (direction 8, 9) peut être abaissé à un pas de 50 mm (combinaison avec les directions 18, 19). Les passages 4 ont, avant introduction du tube, une largeur de 12,7 mm avec une largeur de resserrement de 7,7 mm, ce qui permet de recevoir sans problème des tubes DIN 16 à 20, en raison de la flexibilité du polystyrène expansé.

On notera que, eu égard à la manière dont les plots 2 sont disposés les uns par rapport aux autres, quatre plots 2 contigus par leurs angles délimitent entre eux une zone libre 23 approximativement carrée et que la surface de chaque zone libre 23 est sensiblement supérieure à la surface de chaque plot 2. Il est ainsi possible d'emboîter les plots saillants 2 d'une dalle 1 retournée dans les zones libres 23 d'une dalle 1 non retournée, de manière à former un ensemble de deux dalles emboîtées de moindre volume que deux dalles simplement superposées : cela simplifie et rend plus économique le stockage et le transport des dalles.

Bien entendu, la dalle conforme à l'invention peut donner lieu à de nombreuses réalisations. En particulier, comme illustré à la figure 8, on peut faire en sorte de disposer les plots de manière qu'il subsiste des zones libres, dépourvues de plots, ayant des dimensions suffisantes pour qu'il soit possible d'y poser au moins un pied. L'agencement de la figure 8 se déduit de celui illustré à la figure 6 par le fait que, diagonalement, un alignement de plots sur deux a été supprimé et que les plots 2 subsistants sont reliés diagonalement par deux pavés 15 seulement. Il en résulte que les plots 2 et pavés isolés 15 définissent des zones centrales 24 dépourvues de plots ou pavés et présentant une surface suffisamment importante pour qu'il devienne possible d'y poser au moins un pied (contour 25 en tirets).

Il en résulte que, n'ayant plus à être conçus pour supporter une charge, les plots 2 ou pavés isolés 15 peuvent être réalisés sous une forme allégée. Le nombre réduit des plots laisse la possibilité pour un plus grand nombre de cheminements des conduits, avec des courbures moindres, et finalement une mise en place des conduits plus rapide et moins coûteuse.

## Revendications

1. Dalle à plots (1) constituée en un matériau thermiquement isolant, les plots (2) ayant un contour général sensiblement carré et étant disposés en rangées adjacentes mutuellement décalées et en colonnes adjacentes mutuellement décalées de sorte qu'ils sont alignés diagonalement sur des diagonales perpendiculaires, ces plots étant propres à retenir des tubes (6) de circulation de fluide encliquetés entre des paires de plots diagonalement contigus,
**caractérisée en ce que**, à chacun des ses angles, chaque plot (2) possède, dans sa zone supérieure, un nez saillant (3) d'étendue diagonale,
**en ce que** les portions de paroi, sous-jacentes au nez, des deux côtés du plot qui sont contigus au nez, sont concaves sensiblement parallèlement à la diagonale, et
**en ce que** deux nez (3) en vis-à-vis appartenant respectivement à deux plots (2) diagonalement contigus sont séparés d'un intervalle (5) inférieur au diamètre d'un tube (6) et définissant, pour un tube, un passage avec retenue (4),
ce grâce à quoi chaque passage avec retenue (4) ainsi défini peut être traversé soit par un tube s'étendant (8, 9) le long des côtés adjacents du plot (2), soit par un tube s'étendant diagonalement (7) perpendiculairement à l'étendue du nez (3).

2. Dalle à plots selon la revendication 1, **caractérisée en ce qu'**entre deux angles en vis-à-vis de deux plots (2) respectifs diagonalement contigus est disposée une partie (11) surélevée par rapport à la surface (12) de la dalle, qui définit inférieurement le susdit passage avec retenue (4) et qui est propre à supporter un tube en position surélevée par rapport à la surface de la dalle.

3. Dalle à plots selon la revendication 1 ou 2, **caractérisée en ce que** chaque plot (2) est creusé de deux gouttières (13, 14) sensiblement perpendiculaires entre elles et aux parois latérales du plot, débouchant sensiblement au milieu desdites parois, et subdivisant le plot (2) en quatre pavés (15), et **en ce que** ces gouttières (13, 14) s'étendent verticalement jusqu'à la surface (12) de la dalle, ces gouttières étant conformées pour recevoir et retenir un tube de circulation de fluide.

4. Dalle à plots selon la revendication 3, **caractérisée en ce que** la paroi latérale définissant une gouttière précitée est concave (16) au moins sur une partie de son étendue et se termine inférieurement par une semelle inclinée saillante (17) propre à maintenir le tube au-dessus de la surface (12) de la dalle.

5. Dalle à plots selon l'une quelconque des revendications précédentes, **caractérisée en ce que** le bord supérieur de chaque plot (2) ou de chaque pavé (15) est chanfreiné (20) périmétriquement, y compris sur le nez (3).

6. Dalle à plots selon l'une quelconque des revendications précédentes, **caractérisée en ce que** quatre plots (2) contigus par leurs angles définissent entre eux une zone libre (23) ayant une surface sensiblement supérieure à celle de chaque plot (2), ce grâce à quoi deux dalles retournées l'une par rapport à l'autre peuvent être emboîtées mutuellement pour faciliter leur transport et leur stockage.

7. Dalle à plots selon l'une quelconque des revendications précédentes, **caractérisée en ce que** les diagonales sécantes sur lesquelles sont alignés les plots (2) sont disposées, et notamment mutuellement écartées, de manière telle qu'il subsiste des zones (24) dépourvues de plots ayant des dimensions suffisantes pour qu'il soit possible d'y poser au moins un pied (25), ce grâce à quoi, lors de la pose, il devient possible de marcher sur la dalle sans écraser des plots.

## Patentansprüche

1. Stollenplatte (1), die aus einem wärmeisolierenden Material besteht, wobei die Stollen (2) eine im Wesentlichen quadratische Kontur aufweisen und in benachbarten, wechselseitig versetzten Reihen und in benachbarten, wechselseitig versetzten Spalten angeordnet sind, so dass sie diagonal auf senkrechten Diagonalen ausgerichtet sind, wobei diese Stollen geeignet sind, Rohre (6) zur Zirkulation von Fluid festzuhalten, die zwischen Paare diagonal angrenzende Stollen eingerastet werden,
**dadurch gekennzeichnet, dass** jeder Stollen (2) an jeder seiner Ecken, in ihrem oberem Bereich eine vorspringende Nase (3) von diagonalem Verlauf besitzt,
dass die unter der Nase liegenden Wandabschnitte der zwei Seiten des Stollen, die an die Nase angrenzen, im Wesentlichen parallel zu der Diagonalen konkav sind, und
dass die zwei gegenüberliegende Nasen (3), die jeweils zwei diagonal angrenzenden Stollen (2) angehören, durch einen Zwischenraum (5) getrennt sind, das kleiner als der Durchmesser eines Rohres (6) ist und für ein Rohr einen Durchgang mit Arretierung (4) bilden,
so dass jeder so begrenzte Durchgang mit Arretierung (4) entweder von einem Rohr, das sich entlang der benachbarten Seiten des Stollen (2) erstreckt (8, 9), oder von einem sich senkrecht zum Verlauf der Nase (3) diagonal erstreckenden Rohr (7) durchquert werden kann.

2. Stollenplatte nach Anspruch 1, **dadurch gekennzeichnet, dass** zwischen zwei gegenüberliegenden Ecken von jeweils zwei diagonal angrenzenden Stollen (2) ein relativ zu der Oberfläche (12) der Platte erhöhter Abschnitt (11) liegt, der unten den Durchgang mit Arretierung (4) begrenzt und geeignet ist, ein Rohr in einer relativ zu der Oberfläche der Platte erhöhten Position zu tragen.

3. Stollenplatte nach Anspruch 1 oder 2, **dadurch gekennzeichnet, dass** jeder Stollen (2) von zwei Rinnen (13, 14) durchschnitten wird, die im Wesentlichen senkrecht zueinander und zu Seitenwänden des Stollens liegen und im Wesentlichen in der Mitte der Wände münden und die Stollen (2) in vier Felder (15) unterteilen und dass diese Rinnen (13, 14) sich senkrecht bis zur Oberfläche (12) der Platte erstrecken, wobei diese Rinnen so ausgebildet sind, dass sie ein Rohr zur Zirkulation von Fluid aufnehmen und festhalten können.

4. Stollenplatte nach Anspruch 3, **dadurch gekennzeichnet, dass** die Seitenwand, die eine vorgenannte Rinne begrenzt auf zumindest einem Abschnitt ihres Verlaufs konkav (16) ist und unten in einer schrägen, vorspringenden Fußplatte (17) endet, die geeignet ist das Rohr über der Oberfläche (12) der Platte zu halten.

5. Stollenplatte nach einem der vorhergehenden Ansprüche, **dadurch gekennzeichnet, dass** der obere Rand jedes Stollens (2) oder jedes Felds (15) in Umfangsrichtung einschließlich der Nase (3) angefasst (20) ist.

6. Stollenplatte nach einem der vorhergehenden Ansprüche, **dadurch gekennzeichnet, dass** vier in ihren Ecken angrenzende Stollen (2) zwischen sich einen freien Bereich (23) begrenzen, der eine Oberfläche aufweist, die im Wesentlichen größer als diejenige jedes Stollen (2) ist, mittels der zwei zueinander umgedreht Platten wechselseitig ineinander eingepasst werden können, um ihren Transport und ihre Lagerung zu erleichtern.

7. Stollenplatte nach einem der vorhergehenden Ansprüche, **dadurch gekennzeichnet, dass** die schneidenden Diagonalen, auf denen die Stollen (2) ausgerichtet sind, so angeordnet und wechselseitig beabstandet sind, dass von Stollen freie Bereiche (24) übrig bleiben, die Abmessungen aufweisen, die ausreichen, damit es möglich ist, dort zumindest einen Fuß (25) zu platzieren, mittels dessen es bei der Verlegung möglich ist, auf der Platte zu marschieren, ohne auf die Stollen zu treten.

## Claims

1. Studded slab (1) consisting of a thermally insulating material, the studs (2) having a substantially square general contour and being arranged in mutually offset adjacent rows and in mutually offset adjacent columns such that they are diagonally aligned on perpendicular diagonals, these studs being capable of holding fluid circulation tubes (6) latched between pairs of diagonally adjoining studs, **characterised in that**, at each of its corners, each stud (2) comprises, in its upper zone, a protruding nose (3) with diagonal extension, **in that** the wall portions which are subjacent to the nose, on the two sides of the stud which adjoin the nose, are concave substantially parallel to the diagonal, and **in that** two opposing noses (3) belonging respectively to two diagonally adjoining studs (2) are separated by a gap (5) which is smaller than the diameter of a tube (6) and defines a holding passage (4) for a tube, so each holding passage (4) thus defined can be passed through either by a tube extending (8, 9) along the adjacent sides of the stud (2), or by a tube extending diagonally (7) perpendicularly to the extension of the nose (3).

2. Studded slab according to claim 1, **characterised in that** arranged between two opposing corners of two respective diagonally adjoining studs (2) is a portion (11) which is elevated with respect to the surface (12) of the slab and which at the bottom defines the above-mentioned holding passage (4) and is suitable for supporting a tube in an elevated position relative to the surface of the stud.

3. Studded slab according to claim 1 or 2, **characterised in that** each stud (2) is hollowed out by two grooves (13, 14) which are substantially perpendicular to each other and to the lateral walls of the stud, opening substantially in the middle of said walls, and subdividing the stud (2) into four blocks (15) and **in that** the grooves (13, 14) extend vertically up to the surface (12) of the slab, said grooves being configured to receive and hold a fluid circulation tube.

4. Studded slab according to claim 3, **characterised in that** the lateral wall defining an above-mentioned groove is concave (16) at least in a portion of its extension and ends at the bottom with a protruding tilted foot (17) capable of keeping the tube above the surface (12) of the stud.

5. Studded slab according to any one of the preceding claims, **characterised in that** the upper edge of each stud (2) or each block (15) is peripherally bevelled (20), including on the nose (3).

6. Studded slab according to any one of the preceding claims, **characterised in that** four studs (2) which adjoin at their corners, define therebetween a free zone (23) having an area which is substantially greater than that of each stud (2), two slabs which are inverted relative to each other therefore being mutually interlockable to facilitate transport and conveyance thereof.

7. Studded slab according to any one of the preceding claims, **characterised in that** the secant diagonals, on which the studs (2) are aligned, are arranged, in particular mutually offset, such that there are zones (24) without studs with dimensions such that it is possible to place at least one foot (25) thereon, so, when placing a foot, it becomes possible to walk on the slab without crushing the studs.
